# EUROPÄISCHE PATENTSCHRIFT

(11) **EP 1 524 363 B1**
(45) Veröffentlichungstag und Bekanntmachung des Hinweises auf die Patenterteilung: **22.07.2009**
(21) Anmeldenummer: 04104198.9
(22) Anmeldetag: 02.09.2004
(51) Int. Cl.: D21G 9/00, G01N 15/08

(54) **Verfahren und Anordnung zur Bestimmung der Wasserdurchlässigkeit einer Bespannung**
Method and arrangement for measuring the permeability of a fabric
Procédé et arrangement pour la détermination de la perméabilité d'un habillage

(30) Priorität: 19.09.2003 DE 10343517
(43) Veröffentlichungstag der Anmeldung: 20.04.2005
(73) Patentinhaber: Voith Patent GmbH, 89522 Heidenheim (DE)
(72) Erfinder: Ulfert, Wolfgang Dr., 88069 Tettnang (DE); Pfifferling, Ralf, 89547 Gerstetten (DE); Ischdonat, Thomas, 89429 Bachhagel (DE); Sollinger, Michael, 70184 Stuttgart (DE); Muench, Rudolf, 89551 Koenigsbronn (DE)
(74) Vertreter: Kunze, Klaus

(56) Entgegenhaltungen:
- EP-A- 1 275 772

## Beschreibung

Die Erfindung betrifft ein Verfahren zur Bestimmung der Wasserdurchlässigkeit einer Bespannung einer Maschine zur Herstellung und/oder Behandlung einer Materialbahn, insbesondere Papier- oder Kartonbahn, wobei mindestens eine insbesondere energiereiche Strahlung auf die Bespannung gerichtet wird.

Weiterhin betrifft die Erfindung eine Anordnung zur Bestimmung der Wasserdurchlässigkeit einer Bespannung einer Maschine zur Herstellung und/oder Behandlung einer Materialbahn, insbesondere Papier- oder Kartonbahn, mit wenigstens einer Energiequelle zum Richten mindestens einer insbesondere energiereichen Strahlung auf die Bespannung.

Ein derartiges Verfahren ist beispielsweise aus der europäischen Patentanmeldung EP 1 275 772 A2 bekannt.

Was die Beurteilung oder Messung der Durchlässigkeit von Bespannungen und insbesondere Filzen angeht, so wird derzeit die Wasserdurchlässigkeit herangezogen (vgl. z.B. DE 199 17 553 A1, DE 697 10 356 T2, EP 0 024 205 B1, EP 0 383 486 A2, US 4 880 499, US 5 725 737, US 4 892 621, US 5 135 615 und US 5 349 845).

Der Erfindung liegt die Aufgabe zugrunde, das Verfahren und die Anordnung der eingangs genannten Art weiter zu optimieren. Dabei soll insbesondere auch eine weitere geeignete Messgröße zur Bestimmung der Durchlässigkeit der Bespannung angegeben werden, wobei die betreffende weitere Messgröße insbesondere auch zur Beurteilung der Durchlässigkeit der Bespannung bezüglich des Entwässerungsverhaltens im Pressnip geeignet sein soll.

Diese Aufgabe wird bei einem Verfahren der eingangs genannten Art erfindungsgemäß dadurch gelöst, dass die Bespannung durchdringenden Energiemengen gemessen werden.

Aufgrund dieser Ausgestaltung des Verfahrens ergibt sich eine Vereinfachung der Messapparatur, wobei eine berührungslose Messung möglich ist. Aufgrund fehlender Störgrößen ergeben sich genauere Messwerte als bei berührenden Messungen. Deren Nachteile wie z.B. Leckageverluste an der Düse, Eindringtiefen, prozessabhängige Einstellungen sowie das Erfordernis einer Anpassung der Messgrößen aufgrund von Prozessänderungen (Papiermaschinen-Geschwindigkeit) werden vermieden.

In einer ersten bevorzugten Ausgestaltung werden auch die durch die Bespannung reflektierten Energierungen gemessen.

Die Bespannung kann insbesondere durch einen Pressfilz gebildet sein.

Als die Strahlung liefernde Energiequelle wird bevorzugt wenigstens eine Lichtquelle eingesetzt. Dabei kann mittels der Energiequelle insbesondere ein hochintensiver Licht- oder Laserstrahl erzeugt werden.

Die Bespannung und insbesondere ein jeweiliger Pressfilz verschmutzt zunehmend während ihrer bzw. seiner Laufzeit. Die Lichtdurchlässigkeit steht in einem direkten Zusammenhang mit der Verschmutzung und lässt somit eine Aussage über den Verschmutzungsgrad zu. Der Verschmutzungsgrad beeinflusst die Wasserauf- und abgabefähigkeit der Bespannung bzw. des Filzes. Ein höherer Verschmutzungsgrad würde sich negativ auf die Wasseraufnahmemenge, die Elastizität und die Kompressibilität auswirken, was erfindungsgemäß nunmehr auf einfache und zuverlässige Weise vermieden werden kann.

Mittels der die Strahlung liefernden Energiequelle kann beispielsweise auch eine Schallwelle erzeugt werden, wobei vorzugsweise eine Ultraschallwelle erzeugt wird. Grundsätzlich ist auch der Einsatz mehrerer Energiequellen beispielsweise unterschiedlicher Art denkbar.

Gemäß einer bevorzugten praktischen Ausgestaltung des erfindungsgemäßen Verfahrens wird die Intensität der die Strahlung liefernden Energiequelle in Abhängigkeit von der Bespannungs- bzw. Filzstruktur, von den Partikelgrößen der Verschmutzung, insbesondere Füllstoffen, und/oder von dem Bahnmaterial bzw. Papierstoff definiert.

Die auf die Bespannung gerichtete Strahlung kann zweckmäßigerweise über die Bespannungsbreite oszillieren. Dabei kann die die Bespannung durchdringende Energiemenge vorteilhafterweise mittels eines auf der von der Energiequelle abgewandten Rückseite der Bespannung über die Bespannungsbreite traversierenden Sensors gemessen werden. Die Oszillationsgeschwindigkeit wird dabei vorzugsweise so hoch gewählt, dass eine Messung an möglichst vielen Messpunkten über die Bespannungsbreite erfolgt.

Von Vorteil ist insbesondere auch, wenn die die Strahlung liefernde Energiequelle über die Bespannungsbreite traversiert und die von der Bespannung reflektierte Energiemenge gemessen und ausgewertet wird.

Gemäß einer weiteren vorteilhaften Ausgestaltung des erfindungsgemäßen Verfahrens wird die die Strahlung liefernde Energiequelle über die gesamte Bespannungsbreite auf die Bespannung gerichtet und die die Bespannung durchdringende Energiemenge auf der der Energiequelle gegenüber liegenden Bespannungsseite gemessen. Dabei kann die die Bespannung durchdringende Energiemenge auf der der Energiequelle gegenüber liegende Bespannungsseite insbesondere mittels eines dort quer zur Bespannung traversierenden Sensors gemessen werden.

In bestimmten Fällen kann es auch von Vorteil sein, wenn eine die Strahlung liefernde Energiequelle über die gesamte Bespannungsseite mit der Bespannung in Berührung ist.

Die die Strahlung liefernde Energiequelle kann insbesondere auch über ein an der Bespannung anliegendes transparentes Medium, vorzugsweise Glas, insbesondere Milchglas, auf die Bespannung ausgerichtet werden.

Entsprechend sind auch solche Ausgestaltungen möglich, bei denen die die Bespannung durchdringenden bzw. die durch diese reflektierten Energiemengen über ein transparentes Medium, vorzugsweise Glas, insbesondere Milchglas, gemessen werden.

Zweckmäßigerweise oszilliert die auf die Bespannung gerichtete Strahlung mit insbesondere hoher Geschwindigkeit zwischen der Führer- und Triebseite.

Die die Bespannung durchdringende Energiemenge wird vorzugsweise mittels eines auf der der Energiequelle gegenüber liegenden Bespannungsseite traversierenden Sensors gemessen. Die von der Bespannung reflektierte Energiemenge kann mittels eines auf der Seite der Energiequelle installierten Sensors gemessen werden.

Aus der gemessenen Strahlung wird vorteilhafterweise auf den Bespannungs- bzw. Filzzustand, insbesondere die Dicke oder die Verschmutzung geschlossen.

Die eingangs genannte Aufgabe wird überdies gelöst durch eine Anordnung der eingangs gennanten Art mit wenigstens einem Sensor zum Messen der die Bespannung durchdringenden Energiemengen.

Die Erfindung wird im folgenden anhand von Ausführungsbeispielen unter Bezugnahme auf die Zeichnung näher erläutert; in dieser zeigen:
Figuren 1 und 2
   eine schematische Seitenansicht bzw. Draufsicht einer Anordnung zur Bestimmung der Wasserdurchlässigkeit einer Bespannung, bei der eine durch eine Energiequelle erzeugte Strahlung über die Bespannungsbreite oszilliert und die die Bespannung durchdringende Energiemenge von einem auf der von der Energiequelle abgewandten Rückseite über die Bespannungsbreite traversierenden Sensor gemessen wird,
Figuren 3 und 4
   eine schematische Seitenansicht bzw. Draufsicht einer Anordnung zur Bestimmung der Wasserdurchlässigkeit einer Bespannung, bei der die von einer Energiequelle stammende Strahlung über die gesamte Bespannungsbreite auf die Bespannung gerichtet wird und die die Bespannung durchdringende Energiemenge auf der von der Energiequelle abgewandten Seite der Bespannung mittels einer Vielzahl von Sensoren gemessen wird,
Figuren 5 und 6
   eine schematische Seiteansicht bzw. Draufsicht einer Anordnung zur Bestimmung der Wasserdurchlässigkeit einer Bespannung, bei der die von einer Energiequelle stammende Strahlung über die gesamte Bespannungsbreite auf die Bespannung gerichtet wird und die die Bespannung durchdringende Energiemenge auf der von der Energiequelle abgewandten Seite der Bespannung mittels eines quer zur Bespannung traversierenden Sensors gemessen wird,
Figuren 7 und 8
   eine schematische Seitenansicht bzw. Draufsicht einer Anordnung zur Bestimmung der Wasserdurchlässigkeit einer Bespannung, bei der eine Energiequelle über die gesamte Bespannungsbreite mit der Bespannung in Berührung steht und die die Bespannung durchdringende Energiemenge auf der von der Energiequelle abgewandten Seite der Bespannung mittels eines quer zur Bespannung traversierenden Sensors gemessen wird und
Figuren 9 und 10
   eine schematische Seitenansicht bzw. Draufsicht einer Anordnung zur Bestimmung der Wasserdurchlässigkeit einer Bespannung, bei der eine durch eine Energiequelle erzeugte Strahlung über die Bespannungsbreite oszilliert, die Energiequelle mit einem ebenfalls oszillierenden, auf der gleichen Seite der Bespannung vorgesehenen Sensor zum Messen der durch die Bespannung reflektierten Energiemenge kombiniert ist und die die Bespannung durchdringende Energiemenge von einem auf der von der Energiequelle abgewandten Rückseite über die Bespannungsbreite traversierenden Sensor gemessen wird.

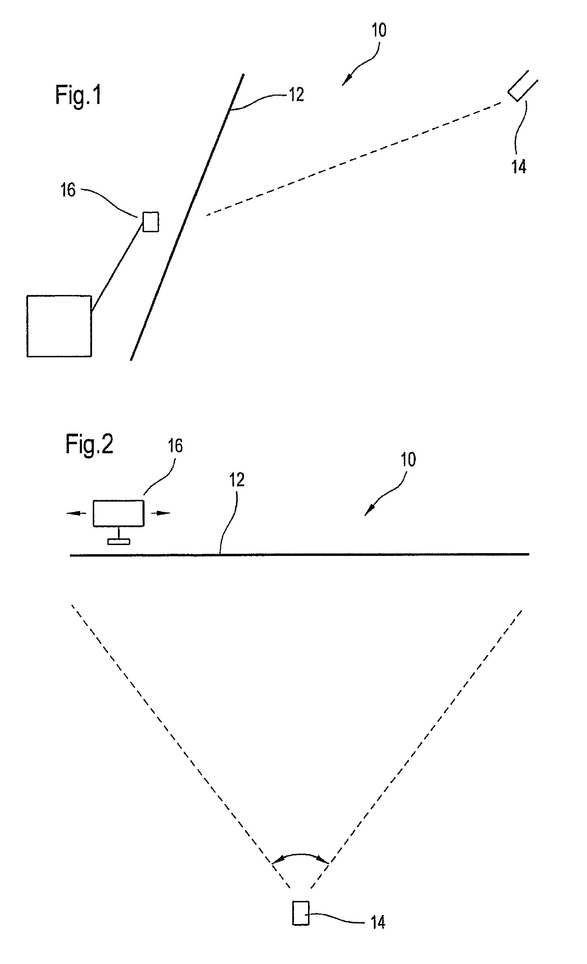

Die Figuren 1 und 2 zeigen in schematischer Seitenansicht bzw. Draufsicht eine Anordnung 10 zur Bestimmung der Wasserdurchlässigkeit einer Bespannung 12, bei der es sich im vorliegenden Fall beispielsweise um einen Filz handelt.

Im vorliegenden Fall oszilliert eine durch eine Energiequelle 14 erzeugte Strahlung über die gesamte Bespannungsbreite. Die die Bespannung 12 durchdringende Energiemenge wird von einem auf der von der Energiequelle 14 abgewandten Rückseite über die gesamte Bespannungsbreite traversierenden Sensor 16 gemessen.

Im vorliegenden Fall wird durch die Energiequelle 14 beispielsweise ein Lichtstrahl erzeugt, der über die Bespannungsbreite oszilliert. Durch den über die Bespannungsbreite traversierenden Sensor 16 wird also die die Bespannung 12 durchdringende Lichtmenge gemessen.

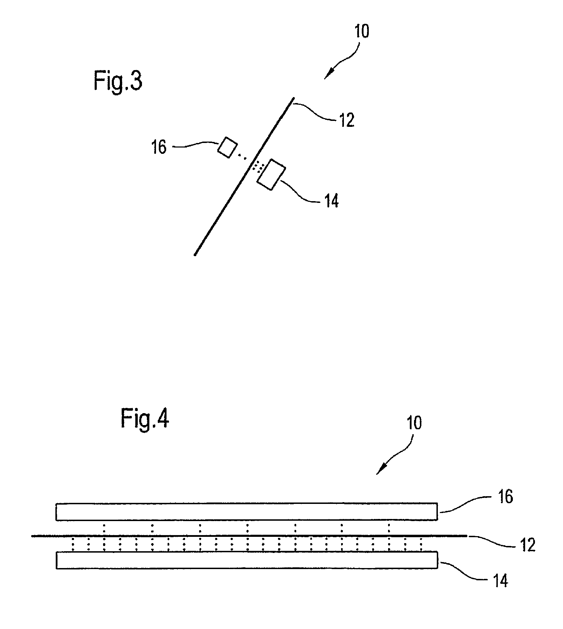

Die Figuren 3 und 4 zeigen in rein schematischer Seitenansicht bzw. Draufsicht eine Anordnung 10 zur Bestimmung der Wasserdurchlässigkeit einer Bespannung 12, bei der die von einer Energiequelle 14 stammende Strahlung über die gesamte Bespannungsbreite auf die Bespannung 12 gerichtet wird. Die die Bespannung 12 durchdringende Energiemenge wird auf der von der Energiequelle 14 abgewandten Seite der Bespannung 12 mittels einer Vielzahl von Sensoren 16 gemessen.

Bei der Bespannung 12 kann es sich beispielsweise wieder um einen Filz handeln.

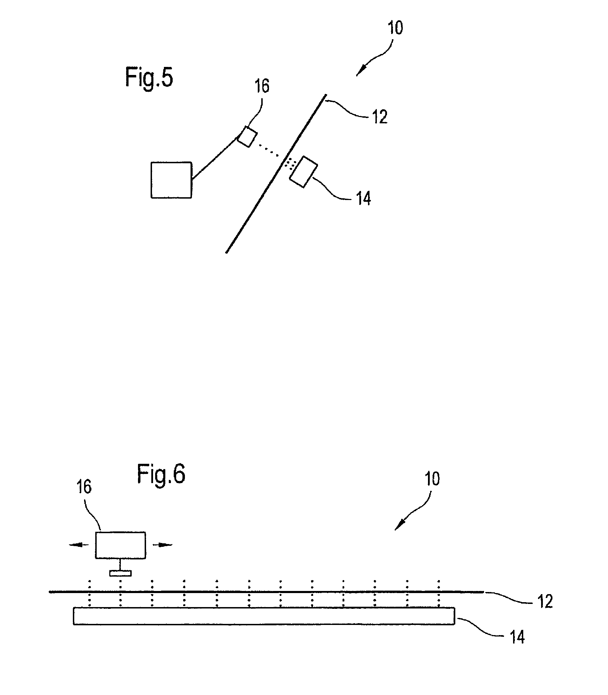

Die Figuren 5 und 6 zeigen in schematischer Seitenansicht bzw. Draufsicht eine Anordnung 10 zur Bestimmung der Wasserdurchlässigkeit einer Bespannung 12, bei der die von einer Energiequelle 14 stammende Strahlung über die gesamte Bespannungsbreite auf die Bespannung 12 gerichtet wird und die die Bespannung 12 durchdringende Energiemenge auf der von der Energiequelle 14 abgewandten Seite der Bespannung mittels eines quer zur Bespannung 12 traversierenden Sensors 16 gemessen wird.

Auch im vorliegenden Fall ist die Bespannung 12 beispielsweise wieder durch einen Filz gebildet.

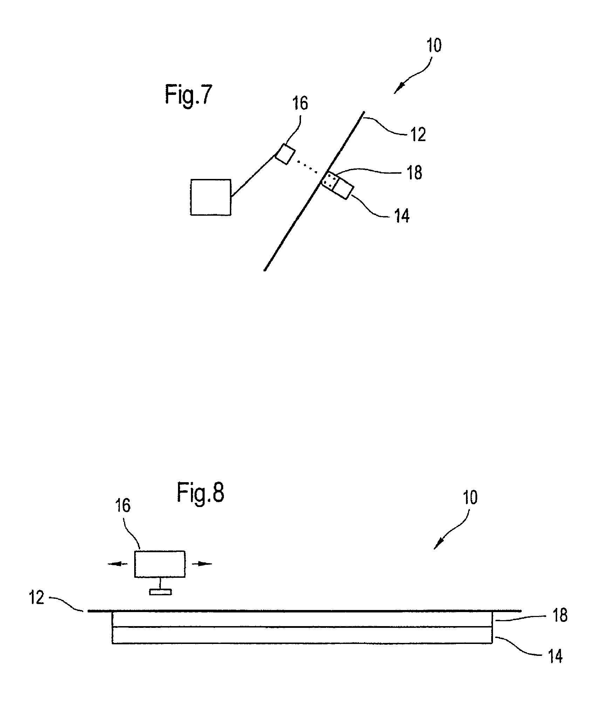

Bei der in den Figuren 7 und 8 wiedergegebenen Anordnung 10 steht eine Energiequelle 14 über die gesamte Bespannungsbreite mit der Bespannung 12 in Berührung. Dabei kann die die Strahlung liefernde Energiequelle 14 insbesondere über ein an der Bespannung 12 anliegendes Milchglas 18 auf die Bespannung 12 ausgerichtet sein.

Die die Bespannung 12 durchdringende Energiemenge wird auf der von der Energiequelle 14 abgewandten Seite der Bespannung 12 mittels eines quer zur Bespannung 12 traversierenden Sensors 16 gemessen.

Bei der Bespannung 12 handelt es sich auch im vorliegenden Fall beispielsweise wieder um einen Filz.

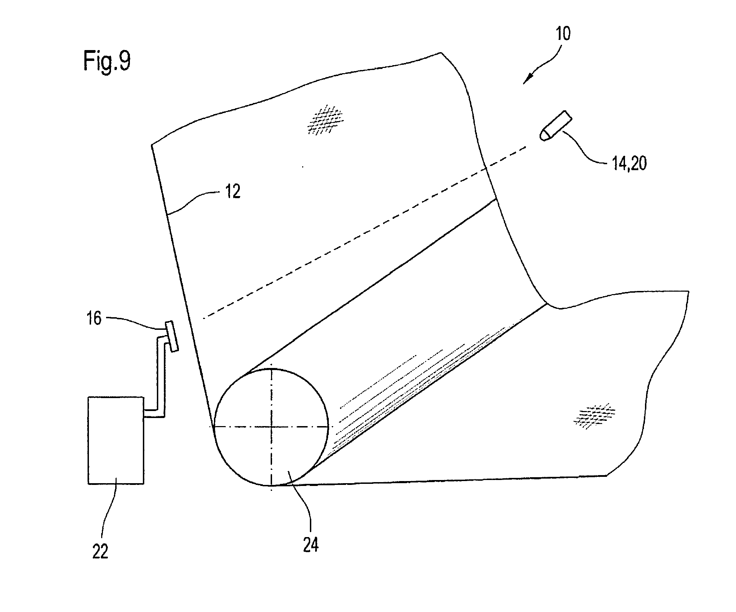

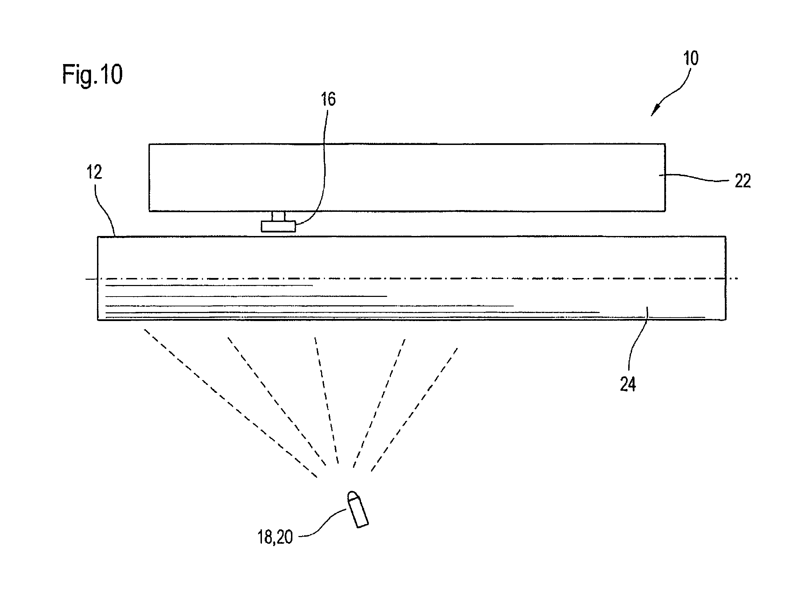

Die Figuren 9 und 10 zeigen wieder in schematischer Seitenansicht bzw. Draufsicht eine Anordnung 10 zur Bestimmung der Wasserdurchlässigkeit einer Bespannung 12, bei der eine durch eine Energiequelle 14 erzeugte Strahlung über die Bespannungsbreite oszilliert. Dabei ist die Energiequelle 14 im vorliegenden Fall mit einem ebenfalls oszillierenden, auf der gleichen Seite der Bespannung 12 vorgesehenen Sensor 20 zum Messen der durch die Bespannung 12 reflektierten Energiemenge kombiniert.

Die die Bespannung 12 durchdringende Energiemenge wird von einem auf der von der Energiequelle 14 abgewandten Rückseite über die Bespannungsbreite traversierenden Sensor 16 gemessen. Dazu ist diesem Sensor 16 eine entsprechende Traversiereinheit 22 zugeordnet.

Im vorliegenden Fall ist die Bespannung 12, bei der es sich beispielsweise wieder um einen Filz handeln kann, um eine Umlenkwalze 24 geführt. Wie anhand der Figuren 9 und 10 zu erkennen ist, erfolgt die Messung der Wasserdurchlässigkeit in der Nähe der Umlenkwalze 24.

### Bezugszeichenliste

- 10: Anordnung, Vorrichtung
- 12: Bespannung, Filz
- 14: Energiequelle
- 16: Sensor
- 18: Milchglas
- 20: Sensor
- 22: Traversiereinheit
- 24: Umlenkwalze

## Patentansprüche

1. Verfahren zur Bestimmung der Wasserdurchlässigkeit einer Bespannung (12) einer Maschine zur Herstellung und/ oder Behandlung einer Materialbahn, insbesondere Papier- oder Kartonbahn, wobei mindestens eine insbesondere energiereiche Strahlung auf die Bespannung (12) gerichtet wird,
**dadurch gekennzeichnet,**
**dass** die die Bespannung (12) durchdringenden Energiemengen gemessen werden.

2. Verfahren nach Anspruch 1,
**dadurch gekennzeichnet,**
**dass** die durch die Bespannung (12) reflektierten Energiemengen gemessen werden.

3. Verfahren nach Anspruch 1 oder 2,
**dadurch gekennzeichnet,**
**dass** die Bespannung (12) durch einen Pressfilz gebildet ist.

4. Verfahren nach Anspruch 1, 2 oder 3,
**dadurch gekennzeichnet,**
**dass** als die Strahlung liefernde Energiequelle (14) wenigstens eine Lichtquelle eingesetzt wird.

5. Verfahren nach Anspruch 4,
**dadurch gekennzeichnet,**
**dass** mittels der Energiequelle (14) ein hochintensiver Licht- oder Laserstrahl erzeugt wird.

6. Verfahren nach Anspruch 1, 2 oder 3,
**dadurch gekennzeichnet,**
**dass** mittels der die Strahlung liefernden Energiequelle (14) eine Schallwelle erzeugt wird.

7. Verfahren nach Anspruch 6,
**dadurch gekennzeichnet,**
**dass** mittels der die Strahlung liefernden Energiequelle (14) eine Ultraschallwelle erzeugt wird.

8. Verfahren nach einem der vorhergehenden Ansprüche,
**dadurch gekennzeichnet,**
**dass** die Intensität der die Strahlung liefernden Energiequelle (14) in Abhängigkeit von der Bespannungs- bzw. Filzstruktur, von den Partikelgrößen der Verschmutzung, insbesondere Füllstoffen, und/oder von dem Bahnmaterial bzw. Papierstoff definiert wird.

9. Verfahren nach einem der vorhergehenden Ansprüche,
**dadurch gekennzeichnet,**
**dass** die auf die Bespannung (12) gerichtete Strahlung über die Bespannungsbreite oszilliert.

10. Verfahren nach Anspruch 9,
**dadurch gekennzeichnet,**
**dass** die die Bespannung (12) durchdringende Energiemenge mittels eines auf der von der Energiequelle (14) abgewandten Rückseite der Bespannung (12) über die Bespannungsbreite traversierenden Sensors (16) gemessen wird.

11. Verfahren nach Anspruch 9 oder 10,
**dadurch gekennzeichnet,**
**dass** die Oszillationsgeschwindigkeit so hoch gewählt wird, dass eine Messung an möglichst vielen Messpunkten über die Bespannungsbreite erfolgt.

12. Verfahren nach einem der vorhergehenden Ansprüche 2-11,
**dadurch gekennzeichnet,**
**dass** die die Strahlung liefernde Energiequelle (14) über die Bespannungsbreite traversiert und dass die von der Bespannung (12) reflektierte Energiemenge gemessen und ausgewertet wird.

13. Verfahren nach einem der vorhergehenden Ansprüche,
**dadurch gekennzeichnet,**
**dass** die die Strahlung liefernde Energiequelle (14) über die gesamte Bespannungbreite auf die Bespannung (12) gerichtet wird und dass die die Bespannung (12) durchdringende Energiemenge auf der der Energiequelle (14) gegenüber liegenden Bespannungsseite gemessen wird.

14. Verfahren nach Anspruch 13,
**dadurch gekennzeichnet,**
**dass** die die Bespannung (12) durchdringende Energiemenge auf der der Energiequelle (14) gegenüber liegenden Bespannungsseite mittels eines dort quer zur Bespannung (12) traversierenden Sensors (16) gemessen wird.

15. Verfahren nach einem der vorhergehenden Ansprüche,
**dadurch gekennzeichnet,**
**dass** eine die Strahlung liefernde Energiequelle (14) über die gesamte Bespannungsbreite mit der Bespannung (12) in Berührung ist.

16. Verfahren nach einem der vorhergehenden Ansprüche,
**dadurch gekennzeichnet,**
**dass** die die Strahlung liefernde Energiequelle (14) über ein an der Bespannung (12) anliegendes transparentes Medium, vorzugsweise Glas, insbesondere Milchglas (18), auf die Bespannung (12) ausgerichtet wird.

17. Verfahren nach einem der vorhergehenden Ansprüche,
**dadurch gekennzeichnet,**
**dass** die die Bespannung (12) durchdringenden bzw. die durch diese reflektierten Energiemengen über ein transparentes Medium, vorzugsweise Glas, insbesondere Milchglas, gemessen werden.

18. Verfahren nach einem der vorhergehenden Ansprüche 2-17,
**dadurch gekennzeichnet,**
**dass** die auf die Bespannung (12) gerichtete Strahlung mit insbesondere hoher Geschwindigkeit zwischen der Führer- und Triebseite oszilliert.

19. Verfahren nach Anspruch 18,
**dadurch gekennzeichnet,**
**dass** die die Bespannung (12) durchdringende Energiemenge mittels eines auf der der Energiequelle (14) gegenüber liegenden Bespannungsseite traversierenden Sensors (16) gemessen wird.

20. Verfahren nach Anspruch 18 oder 19,
**dadurch gekennzeichnet,**
**dass** die von der Bespannung (12) reflektierte Energiemenge mittels eines auf der Seite der Energiequelle (14) installierten Sensors (20) gemessen wird.

21. Verfahren nach einem der vorhergehenden Ansprüche,
**dadurch gekennzeichnet,**
**dass** aus der gemessenen Strahlung auf den Bespannungs- bzw. Filzzustand, insbesondere die Dicke oder die Verschmutzung, geschlossen wird.

22. Anordnung (10) zur Bestimmung der Wasserdurchlässigkeit einer Bespannung (12) einer Maschine zur Herstellung und/oder Behandlung einer Materialbahn, insbesondere Papier- oder Kartonbahn, mit wenigstens einer Energiequelle (14) zum Richten mindestens einer insbesondere energiereichen Strahlung auf die Bespannung (12), insbesondere zur Durchführung des Verfahrens nach einem der vorhergehenden Ansprüche,
**dadurch gekennzeichnet,**
**dass** wenigstens ein Sensor (16) zum Messen der die Bespannung (12) durchdringenden Energiemengen vorgesehen ist.

23. Anordnung (10) nach Anspruch 22,
**dadurch gekennzeichnet,**
**dass** wenigstens ein Sensor (20) zum Messen der durch die Bespannung (12) reflektierten Energiemengen vorgesehen ist.

## Claims

1. Method for determining the water permeability of clothing (12) for a machine for producing and/or treating a material web, in particular paper or board web, at least some, in particular high-energy radiation being aimed at the clothing (12), **characterized in that** the amounts of energy penetrating the clothing (12) are measured.

2. Method according to Claim 1, **characterized in that** the amounts of energy reflected by the clothing (12) are measured.

3. Method according to Claim 1 or 2, **characterized in that** the clothing (12) is formed by a press felt.

4. Method according to Claim 1, 2 or 3, **characterized in that** the energy source (14) which is used to supply the radiation is at least one light source.

5. Method according to Claim 4, **characterized in that** a high-intensity light or laser beam is generated by means of the energy source (14).

6. Method according to Claim 1, 2 or 3, **characterized in that** a sound wave is generated by means of the energy source (14) that supplies the radiation.

7. Method according to Claim 6, **characterized in that** an ultrasound wave is generated by means of the energy source (14) that supplies the radiation.

8. Method according to one of the preceding claims, **characterized in that** the intensity of the energy source (14) that supplies the radiation is defined as a function of the clothing or felt structure, of the particle sizes of the soiling, in particular fillers, and/or of the web material or paper stock.

9. Method according to one of the preceding Claims, **characterized in that** the radiation aimed at the clothing (12) oscillates over the clothing width.

10. Method according to Claim 9, **characterized in that** the amount of energy penetrating the clothing (12) is measured by means of a sensor (16) traversing over the clothing width on the rear side of the clothing (12), facing away from the energy source (14).

11. Method according to Claim 9 or 10, **characterized in that** the rate of oscillation is selected to be so high that a measurement is carried out at as many measurement points as possible over the clothing width.

12. Method according to one of the preceding Claims 2 - 11, **characterized in that** the energy source (14) that supplies the radiation traverses over the clothing width, and **characterized in that** the amount of energy reflected from the clothing (12) is measured and evaluated.

13. Method according to one of the preceding Claims, **characterized in that** the energy source (14) that supplies the radiation is aimed at the clothing (12) over the entire clothing width, and **characterized in that** the amount of energy penetrating the clothing (12) is measured on the side of the clothing opposite the energy source (14).

14. Method according to Claim 13, **characterized in that** the amount of energy penetrating the clothing (12) is measured on the side of the clothing opposite the energy source (14) by means of a sensor (16) traversing transversely there with respect to the clothing (12).

15. Method according to one of the preceding Claims, **characterized in that** an energy source (14) that supplies the radiation is in contact with the clothing (12) over the entire clothing width.

16. Method according to one of the preceding Claims, **characterized in that** the energy source (14) that supplies the radiation is aimed at the clothing (12) via a transparent medium, preferably glass, in particular opal glass (18), resting on the clothing (12).

17. Method according to one of the preceding Claims, **characterized in that** the amounts of energy penetrating the clothing (12) or reflected by the latter are measured via a transparent medium, preferably glass, in particular opal glass.

18. Method according to one of the preceding Claims 2 - 17, **characterized in that** the radiation aimed at the clothing (12) oscillates between the operator and drive side, in particular at high speed.

19. Method according to Claim 18, **characterized in that** the amount of energy penetrating the clothing (12) is measured by means of a sensor (16) traversing on the side of the clothing opposite the energy source (14).

20. Method according to Claim 18 or 19, **characterized in that** the amount of energy reflected from the clothing (12) is measured by means of a sensor (20) installed on the side of the energy source (14).

21. Method according to one of the preceding Claims, **characterized in that,** from the measured radiation, conclusions are drawn about the state of the clothing or felt, in particular the thickness or the soiling.

22. Arrangement (10) for determining the water permeability of clothing (12) for a machine for producing and/or treating a material web, in particular a paper or board web, with at least one energy source (14) for aiming at least some, in particular high-energy, radiation at the clothing (12), in particular for carrying out of the method according to one of the preceding claims, **characterized in that** at least one sensor (16) for measuring the amount of energy penetrating the clothing (12) is provided.

23. Arrangement (10) according to Claim 22, **characterized in that** at least one sensor (12) for measuring the amount of energy reflected by the clothing (12) is provided.

## Revendications

1. Procédé de détermination de la perméabilité à l'eau d'un entoilage (12) d'une machine de fabrication et/ou de traitement d'une nappe de matière, en particulier d'une nappe de papier ou de carton, dans lequel au moins un rayonnement en particulier riche en énergie est orienté sur l'entoilage (12)
**caractérisé en ce que**
la quantité d'énergie qui traverse l'entoilage (12) est mesurée.

2. Procédé selon la revendication 1, **caractérisé en ce que** la quantité d'énergie réfléchie par l'entoilage (12) est mesurée.

3. Procédé selon les revendications 1 ou 2, **caractérisé en ce que** l'entoilage (12) est formé d'un feutre pressé.

4. Procédé selon les revendications 1, 2 ou 3, **caractérisé en ce que** comme source d'énergie (14) émettant le rayonnement, on utilise au moins une source de lumière.

5. Procédé selon la revendication 4, **caractérisé en ce qu'**un faisceau lumineux ou laser à haute intensité est émis par la source d'énergie (14).

6. Procédé selon les revendications 1, 2 ou 3, **caractérisé en ce qu'**une onde acoustique est émise au moyen de la source d'énergie (14) qui émet le rayonnement.

7. Procédé selon la revendication 6, **caractérisé en ce qu'**une onde ultrasonique est émise au moyen de la source d'énergie (14) qui émet le rayonnement.

8. Procédé selon l'une des revendications précédentes, **caractérisé en ce que** l'intensité de la source d'énergie (14) qui émet le rayonnement est définie en fonction de la structure de l'entoilage ou du feutre, de la taille des particules d'encrassement, en particulier des charges, et/ou du matériau de la nappe ou de la matière du papier.

9. Procédé selon l'une des revendications précédentes, **caractérisé en ce que** le rayonnement orienté sur l'entoilage (12) oscille sur la largeur de l'entoilage.

10. Procédé selon la revendication 9, **caractérisé en ce que** la quantité d'énergie qui traverse l'entoilage (12) est mesurée au moyen d'un détecteur (16) qui croise sur toute la largeur de l'entoilage le côté arrière, non tourné vers la source d'énergie (14), de l'entoilage (12).

11. Procédé selon les revendications 9 ou 10, **caractérisé en ce que** la vitesse d'oscillation sélectionnée est suffisamment élevée pour permettre une mesure en un nombre aussi grand que possible de points de mesure sur la largeur de l'entoilage.

12. Procédé selon l'une des revendications 2 à 11 qui précèdent, **caractérisé en ce que** la source d'énergie (14) qui émet le rayonnement croise la largeur de l'entoilage et **en ce que** la quantité d'énergie réfléchie par l'entoilage (12) est mesurée et évaluée.

13. Procédé selon l'une des revendications précédentes, **caractérisé en ce que** la source d'énergie (14) qui émet le rayonnement est dirigée sur l'entoilage (12) sur toute la largeur de l'entoilage et **en ce que** la quantité d'énergie qui traverse l'entoilage (12) est mesurée sur le côté de l'entoilage opposé à la source d'énergie (14).

14. Procédé selon la revendication 13, **caractérisé en ce que** la quantité d'énergie qui traverse l'entoilage (12) est mesurée sur le côté de l'entoilage opposé à la source d'énergie (14) au moyen d'un détecteur (16) qui croise l'entoilage (12).

15. Procédé selon l'une des revendications précédentes, **caractérisé en ce qu'**une source d'énergie (14) qui émet le rayonnement est en contact avec l'entoilage (12) sur toute la largeur de l'entoilage.

16. Procédé selon l'une des revendications précédentes, **caractérisé en ce que** la source d'énergie (14) qui délivre le rayonnement est orientée sur l'entoilage (12) à travers un milieu transparent appliqué sur l'entoilage (12), de préférence en verre et en particulier en verre laiteux (18).

17. Procédé selon l'une des revendications précédentes, **caractérisé en ce que** la quantité d'énergie qui traverse l'entoilage (12) ou qui est réfléchie par ce dernier est mesurée à travers un milieu transparent, de préférence en verre et en particulier en verre laiteux.

18. Procédé selon l'une des revendications 2 à 17 qui précèdent, **caractérisé en ce que** le rayonnement orienté sur l'entoilage (12) oscille entre le côté guide et le côté entraînement, en particulier à haute vitesse.

19. Procédé selon la revendication 18, **caractérisé en ce que** la quantité d'énergie qui traverse l'entoilage (12) est mesurée au moyen d'un détecteur (16) qui croise le côté de l'entoilage opposé à la source d'énergie (14).

20. Procédé selon les revendications 18 ou 19, **caractérisé en ce que** la quantité d'énergie réfléchie par l'entoilage (12) est mesurée au moyen d'un détecteur (20) installé sur le côté de la source d'énergie (14).

21. Procédé selon l'une des revendications précédentes, **caractérisé en ce que** des conclusions sont tirées sur l'état de l'entoilage ou du feutre, en particulier leur épaisseur ou leur encrassement, à partir du rayonnement mesuré.

22. Système (10) de détermination de la perméabilité à l'eau de l'entoilage (12) d'une machine de fabrication et/ou de traitement d'une nappe de matériau, en particulier d'une nappe de papier ou de carton, qui présente au moins une source d'énergie (14) destinée à diriger au moins un rayonnement en particulier riche en énergie sur l'entoilage (12), en particulier en vue de la mise en oeuvre du procédé selon l'une des revendications précédentes,
**caractérisé en ce que**
il présente au moins un détecteur (16) de mesure de la quantité d'énergie qui traverse l'entoilage (12).

23. Système (10) selon la revendication 22,
**caractérisé en ce qu'**il présente au moins un détecteur (20) de mesure de la quantité d'énergie réfléchie par l'entoilage (12).
